# EUROPÄISCHE PATENTSCHRIFT

(11) **EP 3 070 204 B1**
(45) Veröffentlichungstag und Bekanntmachung des Hinweises auf die Patenterteilung: **06.05.2020**
(21) Anmeldenummer: 16000501.3
(22) Anmeldetag: 02.03.2016
(51) Int. Cl.: E03B 3/12, E03B 3/18

(54) **VORRICHTUNG UND VERFAHREN ZUM FÖRDERN VON WASSER AUS EINEM BRUNNEN**
DEVICE AND METHOD FOR CONVEYING WATER FROM A WELL
DISPOSITIF ET PROCÉDÉ D'ADDUCTION D'EAU À PARTIR D'UNE FONTAINE

(30) Priorität: 17.03.2015 DE 102015003375; 09.05.2015 DE 102015006093
(43) Veröffentlichungstag der Anmeldung: 21.09.2016
(73) Patentinhaber: Hölscher Wasserbau GmbH, 49733 Haren (Ems) (DE)
(72) Erfinder: Teiken, Josef, 49733 Haren (Ems) (DE)
(74) Vertreter: Dammertz, Ulrich

(56) Entgegenhaltungen:
- DE-A1- 19 534 882
- DE-U1-202009 007 307
- DE-U1-202014 105 093

## Beschreibung

Die Erfindung betrifft eine Vorrichtung zum Fördern von Wasser aus einem Brunnen zur Wasserhaltung oder Wassersenkung bei einem Tiefbau-Bauwerk, nach dem Oberbegriff von Anspruch 1. Die Erfindung betrifft ebenfalls ein entsprechendes Verfahren zum Fördern von Wasser aus einem Brunnen mit einer solchen Vorrichtung.

Zur Wasserhaltung oder Wassersenkung bei Tiefbau-Bauwerken ist es bekannt, eine Vorrichtung mit einer Pumpeinrichtung in eine Bohrung einzubringen. Durch den Betrieb der Pumpeinrichtung ist es möglich, Wasser aus dem Erdreich angrenzend an ein Tiefbau-Bauwerk herauszufördern und somit den Grundwasserspiegel entweder zu senken oder auf einem vorbestimmten tiefen Pegel zu halten.

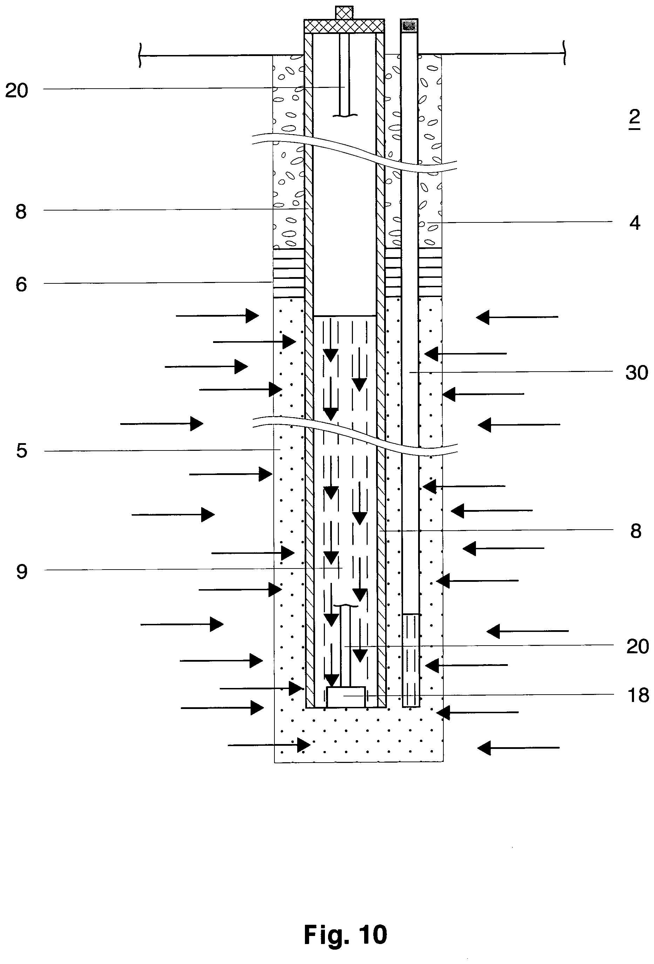

In Fig. 10 ist eine Längsschnittansicht durch eine herkömmliche Vorrichtung gezeigt, mittels der Wasser aus einem Brunnen 2 gefördert werden kann. Der Brunnen 2 weist eine Bohrung 4 auf, die nach einem Einbringen der Vorrichtung mit einem speziellen Kies mit vorbestimmter Körnung verfüllt wird. Hierdurch wird eine Ringraumschüttung 5 gebildet, nämlich in dem Ringraum zwischen einer Außenumfangsfläche der Vorrichtung und einem Rand der Bohrung 4. Des Weiteren ist innerhalb der Bohrung 4, in einer vorbestimmten axialen Tiefe davon, eine Tonsperrschicht 6. vorgesehen. Die Vorrichtung umfasst ein längliches Schlitzrohr 8, das üblicherweise aus PVC-Kunststoff hergestellt ist. In der Wandung dieses Schlitzrohrs 8 sind eine Vielzahl von axial verlaufenden Schlitzen 9 ausgebildet, die ein Eintreten von Wasser radial von außen hinein in das Schlitzrohr 8 ermöglichen. Hierbei dient die Ringraumschüttung 5 als Filter für das radial von außen einströmende Wasser.

In einem Bodenabschnitt des Schlitzrohrs 8 einer herkömmlichen Vorrichtung nach der Fig. 10 ist eine Pumpeinrichtung 18 angeordnet, die mit einer Verbindungsleitung 20 verbunden ist. Diese Verbindungsleitung 20 führt durch das Schlitzrohr 8 hindurch an eine Oberfläche, wobei in Fig. 10 zur Vereinfachung lediglich Abschnitte der Verbindungsleitung 20 ganz unten und ganz oben gezeigt sind. Beim Betrieb der Pumpeinrichtung 18 ist es somit möglich, Wasser, welches aus dem Brunnen 2 in das Schlitzrohr 8 hineintritt, durch die Verbindungsleitung 20 aus dem Brunnen 2 herauszufördern.

Parallel zum Schlitzrohr 8 ist in die Bohrung 4 des Brunnens 2 des Weiteren ein separates Pegelrohr 30 eingebracht, mittels dessen ein Pegel des Grundwassers, der sich bei einem Betrieb der Pumpeinrichtung 18 einstellt, gemessen werden kann. In bekannter Weise kann die Pumpeinrichtung 18 in Abhängigkeit des mit dem Pegelrohr 30 erfassten Pegels des Grundwassers angesteuert werden.

Die herkömmliche Vorrichtung nach der Fig. 10 funktioniert in der Weise, dass Wasser aus dem Bereich des Brunnens, der vertikal unterhalb der Tonsperrschicht 6 liegt, radial von außen in das Schlitzrohr 8 hineintritt. Anschließend fällt bzw. strömt dann das Wasser innerhalb des Schlitzrohrs 8 vertikal nach unten in Richtung der Pumpeinrichtung 18, wie dies durch die vertikal nach unten gerichteten Pfeile in der Fig. 10 innerhalb des Schlitzrohrs 8 symbolisiert ist. Eine solche Strömung des Wassers innerhalb des Schlitzrohrs 8 hat den Nachteil, dass dabei das Wasser in Folge einer Verwirbelung mit Sauerstoff angereichert wird, und sich dadurch Eisenhydroxid bildet. Durch den im Wasser gelösten Sauerstoff kommt es in den Maschinenteilen bzw. Bauelementen, die von dem abgepumpten Wasser durchströmt werden, regelmäßig zu Verockerungen. Hiervon betroffen sind beispielsweise die Pumpeinrichtung 18 und die daran angeschlossene Verbindungsleitung 20. Nach einer bestimmten Betriebszeit ist es wegen der sich bildenden Verockerungen notwendig, die verschmutzten Maschinenteile bzw. Bauelemente entweder aufwendig zu reinigen oder gar vollständig zu ersetzen. Neben dem hierzu erforderlichen großen Aufwand führt dies auch zu dem Nachteil, dass dann der Betrieb der Vorrichtung zum Abpumpen von Wasser aus dem Brunnen 2 unterbrochen werden muss. Ein weiterer Nachteil einer herkömmlichen Vorrichtung nach der Fig. 10 besteht darin, dass die axialen Schlitze 9, die in dem PVC-Schlitzrohr 8 ausgebildet sind, durch Körner, Sand, Sedimente oder dergleichen verstopft werden können. Dies liegt an einem konstanten Abstand, den einander gegenüberliegende Wandungen der Schlitze 9 in radialer Richtung eines PVC-Schlitzrohrs 8 aufweisen. Wegen dieser Struktur setzen sich störende Partikel schneller in den Schlitzen 9 fest, in Verbindung mit Ablagerungen von Eisenhydroxid, Mangan, Kalk oder sonstigen Mineralstoffen. Hierdurch wird ein möglicher Wassereintrag von Brunnenwasser hinein in das Schlitzrohr 8 vermindert. Schließlich ist es mit einem PVC hergestellten Schlitzrohr 8 entweder nur wenige Male, oder sogar gar nicht möglich, die Vorrichtung 1 wieder vertikal aus der Bohrung 4 des Brunnens 2 herauszuziehen, ohne dabei das Schlitzrohr 8 zu schädigen und die Vorrichtung ein weiteres Mal verwenden zu können.

Aus dem Vorlesungsumdruck "Grundbau - Bodenmechanik - Unterirdisches Bauen" des Instituts für Grundbau und Bodenmechanik der Technischen Universität Braunschweig (8. Auflage, 1992) sind eine Vorrichtung mit den Merkmalen des Oberbegriffs von Anspruch 1 und ein zugehöriges Verfahren zum Fördern von Wasser aus einem Brunnen bekannt.

Aus DE 20 2014 105 093 U1 ist eine Rohranordnung bekannt, bei der ein Wickeldrahtfilter aus Edelstahl besteht.

Aus DE 20 2009 007 307 U1 ist eine Vorrichtung zum Fördern von Wasser nach dem Oberbegriff von Anspruch 1 bekannt.

Entsprechend liegt der Erfindung die Aufgabe zugrunde, eine Vorrichtung und ein Verfahren zum Fördern von Wasser aus einem Brunnen zur Wasserhaltung oder Wassersenkung bei einem Tiefbau-Bauwerk im Hinblick auf eine erhöhte Wirtschaftlichkeit zu optimieren.

Die obige Aufgabe wird durch eine Vorrichtung mit den Merkmalen von Anspruch 1, und durch ein Verfahren mit den Merkmalen von Anspruch 11 gelöst. Vorteilhafte Weiterbildungen der Erfindungen sind in den abhängigen Ansprüchen definiert.

Eine erfindungsgemäße Vorrichtung dient zum Fördern bzw. Abpumpen von Wasser aus einem Brunnen zur Wasserhaltung oder Wassersenkung bei einem Tiefbau-Bauwerk, und umfasst zumindest ein längliches Vollrohr, das vertikal in eine Bohrung des Brunnens eingebracht werden kann. Des Weiteren umfasst die Vorrichtung zumindest ein aus Edelstahl hergestelltes Filterrohr, das in Form eines Wickeldrahtfilters ausgebildet ist und an einer unteren Seite des Vollrohrs angeschlossen ist, und eine Pumpeinrichtung, mittels der Wasser, welches radial von außen durch das Filterrohr einströmt, abgepumpt werden kann. Ein Durchmesser des Filterrohrs ist kleiner gewählt als ein Durchmesser des Vollrohrs. Innerhalb des Vollrohrs ist eine Aufstandsfläche ausgebildet, wobei die Pumpeinrichtung auf der Aufstandsfläche angeordnet ist. Vorzugsweise kann auch das Vollrohr aus Edelstahl hergestellt sein.

Im Sinne der vorliegenden Erfindung darf darauf hingewiesen werden, dass ein Vollrohr als ein zylindrisches Rohr zu verstehen ist, welches innen hohl ausgebildet ist und in seiner Wandung bzw. Umfangsfläche keine Öffnungen, Ausnehmungen oder dergleichen hat. Insoweit ist es bei einem solchen Vollrohr nicht möglich, dass Wasser radial von außen durch dessen Umfangsfläche hindurch in das Innere des Rohrs eintritt.

Der Erfindung liegt die wesentliche Erkenntnis zugrunde, dass zumindest das Filterrohr, und vorzugsweise auch das Vollrohr, aus Edelstahl hergestellt sind. In dieser Weise wird die Stabilität der Vorrichtung im Vergleich zu herkömmlich bekannten Vorrichtungen, die zumeist aus PVC-Rohren hergestellt sind, wesentlich erhöht und ein mehrfacher Ein- und Ausbau in bzw. aus Brunnenbohrungen ermöglicht. Im Ergebnis kann die Lebensdauer einer erfindungsgemäßen Vorrichtung beträchtlich erhöht werden, wodurch ein mehrfacher Einsatz der Vorrichtung an verschiedenen Baustellen realisiert werden kann.

Durch die Ausbildung des Filterrohrs mit kleinerem Durchmesser als im Vergleich zum Vollrohr ergibt sich auch eine vorteilhafte Ausgestaltung der Brunnenbohrung dahingehend, dass eine Ringraumschüttung angrenzend an das Filterrohr eine größere radiale Erstreckung aufweist als eine Ringraumschüttung angrenzend an das Vollrohr. Somit durchströmt Wasser, welches radial von außen in das Filterrohr eintritt, eine größere Strecke von Filterkies, was zu einer verstärkten Reinigung des Wassers in diesem Bereich führt.

Die innerhalb des Vollrohrs ausgebildete Aufstandsfläche ist zweckmäßigerweise angrenzend an der unteren Stirnseite des Vollrohrs angeordnet, und ist im einfachsten Fall durch einen Bereich der unteren Stirnseite ausgebildet. Hierdurch entsteht eine "Stufe", die zur Aufnahme der Pumpeinrichtung genutzt wird. Bei einem "Ziehen" der Vorrichtung heraus aus der Bohrung eines Brunnens ist es von Vorteil, wenn die Pumpeinrichtung innerhalb des Vollrohrs verbleibt, nämlich auf der soeben genannten Aufstandsfläche an der unteren Stirnseite des Vollrohrs. Dies minimiert vorteilhaft den Montageaufwand bei einer Handhabung der Vorrichtung.

Durch eine Ausgestaltung des Filterrohrs in Form eines Wickeldrahtfilters ist es möglich, dass Wasser radial von außen in das Filterrohr hineinströmt, und anschließend durch die daran angrenzende Pumpeinrichtung aus dem Brunnen axial nach oben an die Oberfläche abgepumpt wird.

Im Zusammenhang mit einer Inbetriebnahme der erfindungsgemäßen Vorrichtung und der damit verbundenen Pumpeinrichtung darf darauf hingewiesen werden, dass ein wesentliches Merkmal hierbei darin besteht, dass das abzupumpende Wasser ausschließlich radial von außen durch das Filterrohr, jedoch nicht radial von außen durch das Vollrohr eintreten kann. Das Wasser strömt in einem Bereich der Brunnenbohrung, der sich vertikal unterhalb einer Tonsperrschicht des Brunnens befindet, entlang einer Außenumfangsfläche des Vollrohrs und durch eine Ringraumschichtung des Brunnens vertikal nach unten in Richtung des Filterrohrs. Das abzupumpende Wasser wird somit größtenteils vertikal entlang der Außenumfangsfläche des Vollrohrs gefördert und tritt dann radial von außen in das Filterrohr ein. Hierbei wird eine gleichmäßige Strömung des Wassers gewährleistet und gleichzeitig eine Verwirbelung des Wassers und ein Lösen von Sauerstoff darin verhindert, wodurch das bislang herrschende Problem einer Verockerung der Pumpeinrichtung und der daran angeschlossenen Rohrelemente nicht weiter besteht.

Bei einem Verfahren nach der vorliegenden Erfindung, welches zum Abpumpen von Wasser aus einem Brunnen zur Wasserhaltung oder Wassersenkung bei einem Tiefbau-Bauwerk durchgeführt wird, wird eine Vorrichtung wie vorstehend erläutert eingesetzt, wobei Wasser bei einem Betrieb der Pumpeinrichtung radial von außen in das Filterrohr einströmt und anschließend durch das zumindest eine Vollrohr aus dem Brunnen abgepumpt wird. Hierbei durchströmt Wasser eine Ringraumschichtung des Brunnens vertikal nach unten in Richtung des Filterrohrs, bevor es radial von außen in das Filterrohr eintritt. In Bezug auf die hierbei eingesetzte Vorrichtung ist ein Durchmesser des Filterrohrs kleiner als ein Durchmesser des Vollrohrs, so dass die Ringraumschüttung des Brunnens angrenzend an das zumindest eine Filterrohr der Vorrichtung im Vergleich zur Ringraumschüttung des Brunnens angrenzend an das zumindest eine Vollrohr der Vorrichtung eine größere radiale Erstreckung aufweist.

Zweckmäßigerweise entspricht hierbei ein Axiallängenabschnitt, in dem das zumindest eine Vollrohr der Vorrichtung in der Bohrung des Brunnens vertikal unterhalb von dessen Tonsperrschicht verläuft, einem Vielfachen des Durchmessers des Vollrohrs. Somit strömt Wasser aus einem Bereich des Brunnens unterhalb von dessen Tonsperrschicht vertikal nach unten entlang einer Außenumfangsfläche des Vollrohrs und durch die Ringraumschichtung des Brunnens hindurch, bevor es anschließend radial von außen in das Filterrohr eintritt. Dies vermeidet eine Verwirbelung des Wassers und somit auch ein Lösen von Sauerstoff im Wasser, wodurch das Problem von Verockerungen der Pumpeinrichtung bzw. von Rohrleitungen zumindest vermindert oder vollständig behoben ist.

Die Erfindung ist nachfolgend anhand von bevorzugten Ausführungsformen in der Zeichnung schematisch dargestellt und wird unter Bezugnahme auf die Zeichnung ausführlich beschrieben.

Es zeigen:
- Fig. 1: eine vereinfachte Seitenansicht einer erfindungsgemäßen Vorrichtung,
- Fig. 1a: eine vereinfachte Schnittansicht entlang der Linie I-I von Fig. 1,
- Fig. 1b: eine vereinfachte Draufsicht auf eine innere Aufstandsfläche eines Vollrohrs von einer Vorrichtung gemäß Fig. 1,
- Fig. 2: eine vereinfachte Längsschnittansicht eines Brunnens, in den eine Vorrichtung gemäß Fig. 1 eingebracht ist,
- Fig. 3: eine vereinfachte Längsschnittansicht eines unteren Teils der Vorrichtung 1, wenn sie gemäß Fig. 2 in die Bohrung eines Brunnens eingebracht ist,
- Fig. 4: eine vereinfachte Querschnittsansicht einer Wandung eines Filterrohrs der Vorrichtung von Fig. 1,
- Fig. 5: eine vereinfachte Seitenansicht von gegenüberliegenden Rohrelementen bzw. Bauteilen der Vorrichtung von Fig. 1,
- Fig. 6: eine Seitenansicht einer Stirnseite eines Rohrelements von Fig. 5,
- Fig. 7, 8: Perspektivdarstellungen der Rohrelemente von Fig. 5, zur Verdeutlichung des Verlaufs einer Montage dieser Rohrelemente mit ihren gegenüberliegenden Stirnseiten, und
- Fig. 9: eine Perspektivansicht der Rohrelemente von Fig. 5, in vollständig zusammengestecktem Zustand.

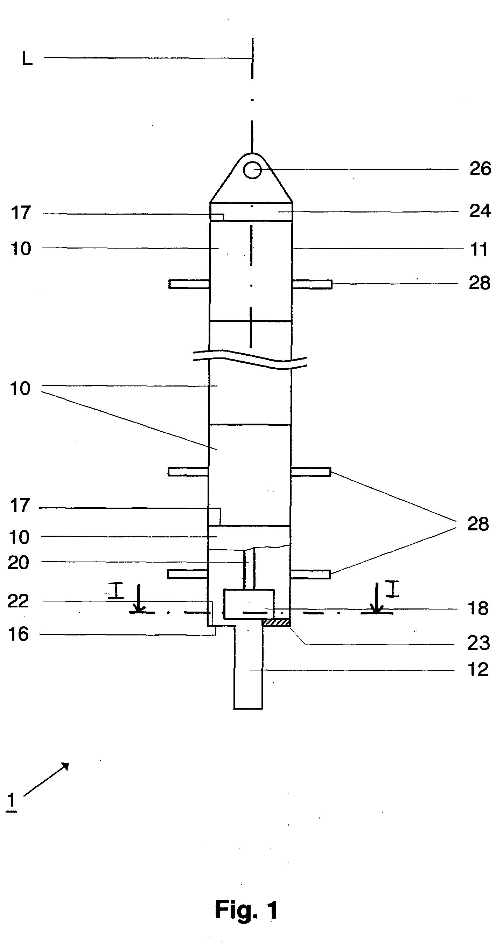

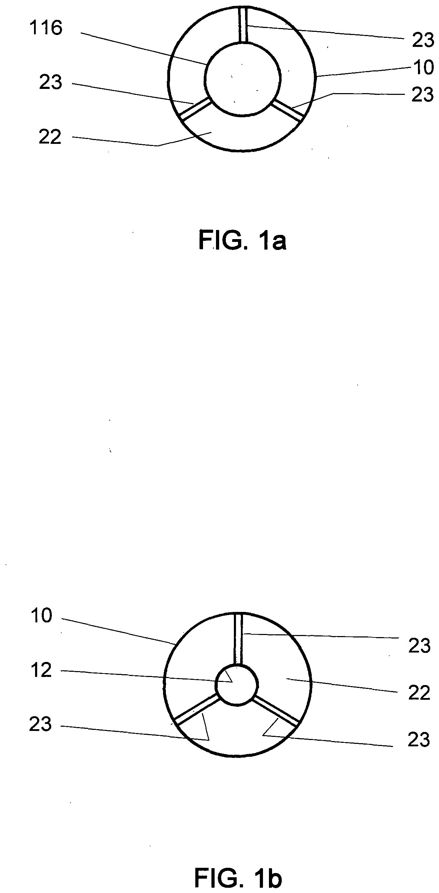

Fig. 1 zeigt eine vereinfachte Seitenansicht einer erfindungsgemäßen Vorrichtung 1 und deren wesentliche Bauteile.

Die Vorrichtung 1 umfasst zumindest ein Vollrohr 10, und zumindest ein Filterrohr 12, das an einer unteren Stirnseite 16 des Vollrohrs 10 angeschlossen ist. Diesbezüglich darf darauf hingewiesen werden, dass bei der Darstellung von Fig. 1 das Filterrohr 12 an das zuunterst gezeigte Vollrohr 10 angeschlossen ist, nämlich in der Weise, dass eine hydraulische Verbindung zwischen dem Inneren des Filterrohrs 12 und dem Vollrohr 10 besteht. Somit kann Wasser aus dem Filterrohr 12 in das Vollrohr 10 hinein strömen. Oberhalb des zuunterst gezeigten Vollrohrs 10 können weitere Vollrohre 10 angeschlossen bzw. befestigt sein. Entsprechend wird eine gesamte axiale Länge der Vorrichtung 1 durch die Mehrzahl von Vollrohren 10, die mit ihren Stirnseiten aneinander befestigt sind, in Verbindung mit dem Filterrohr 12, das an dem zuunterst angeordneten Vollrohr 10 angeschlossen ist, definiert.

Die Vorrichtung 1 umfasst eine Pumpeinrichtung 18, die innerhalb des Vollrohrs 10 angeordnet ist. Die Pumpeinrichtung 18 ist mit einer Verbindungsleitung 20 verbunden, die durch das Vollrohr 10 hindurch an einer oberen Stirnseite der Vorrichtung 1 nach außen geführt ist. Zur Vereinfachung ist in Fig. 1 lediglich ein Teil der Verbindungsleitung 20 gezeigt.

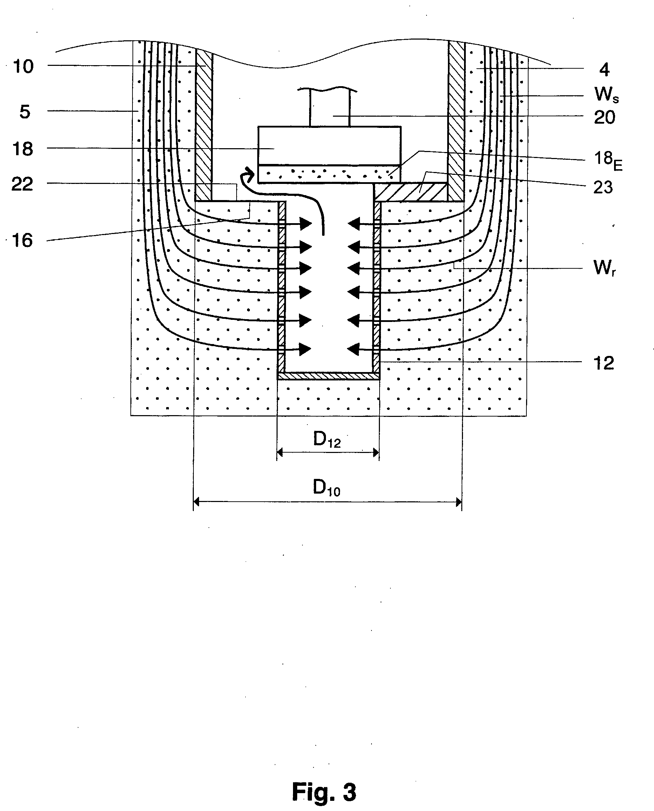

Das Filterrohr 12 weist im Vergleich zum daran angrenzenden Vollrohr 10 einen kleineren Durchmesser auf. Hierdurch wird an einer unteren Stirnseite 16 des Vollrohrs 10 eine Aufstandsfläche 22 ausgebildet, auf der die Pumpeinrichtung 18 angeordnet ist. Im Einzelnen sind auf der Aufstandsfläche 22 mehrere Aufsitzblöcke 23 angebracht, auf denen die Pumpeinrichtung 18 mit ihrer Unterseite aufsitzt. Diese Aufsitzblöcke 23 bewirken, dass Wasser aus dem Filterrohr 12 nach oben hinein in das Vollrohr 10 strömen kann, wobei das Wasser die Unterseite der Pumpeinrichtung 18 gleichmäßig umströmt und dann in deren Einlaufbereich 18_{E} hinein gelangt (Fig. 3).

Fig. 1a zeigt eine vereinfachte Schnittansicht entlang der Linie I-I von Fig. 1. Dies verdeutlicht ein Aufsitzen der Pumpeinrichtung 18 auf den Aufsitzblöcken 23. Fig. 1b zeigt eine Draufsicht auf die Aufstandsfläche 22 innerhalb des Vollrohrs 10, wobei die Pumpeinrichtung 18 zur Vereinfachung weggelassen ist. Es ist zu erkennen, dass die Aufsitzblöcke 23 sich radial von der Mündung des Filterrohrs 12 bis zum Außenrand des Vollrohrs 10 erstrecken, und insoweit eine stabile Auflagefläche für die Pumpeinrichtung 18 bilden.

An einer oberen Stirnseite 17 eines Vollrohrs 10, welches bei der Vorrichtung 1 zuoberst angeordnet ist, kann eine Hebekappe 24 mit Verbindungsmitteln 26 angebracht werden. Die Verbindungsmittel 26 können beispielsweise in Form eines Ringauges oder dergleichen ausgebildet sein, und dienen zu dem Zweck, dass daran ein Krankhaken oder dergleichen angebracht wird. Entsprechend ist es möglich, die Vorrichtung 1 mit der Hebekappe 24 zu halten oder auf die Vorrichtung 1 in ihrer Längsachse L eine Zugkraft aufzubringen, z.B. für ein Herausziehen der Vorrichtung 1 aus einer Brunnenbohrung.

An einer Außenumfangsfläche der jeweiligen Vollrohre 10 können radiale Abstandshalter 28 angebracht sein. Der Zweck dieser radialen Abstandshalter 28 ist nachstehend noch im Detail erläutert.

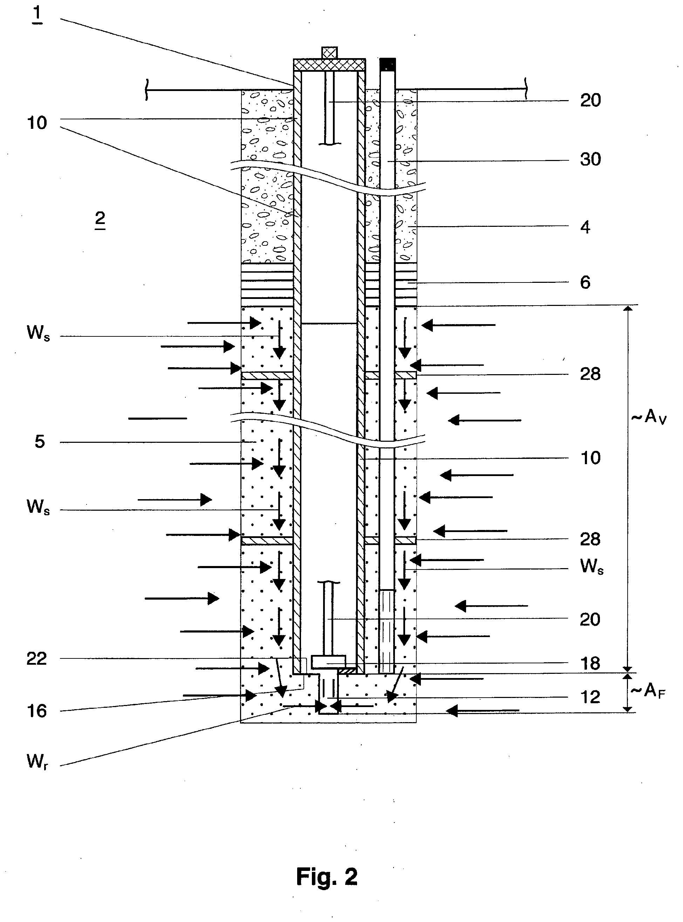

Fig. 2 zeigt eine prinzipiell vereinfachte Längsschnittansicht durch einen Brunnen 2 und eine Bohrung 4 dieses Brunnens, in der die Vorrichtung 1 gemäß Fig. 1 eingebracht ist. Der Ringraum, der sich zwischen der Außenumfangsfläche 11 der Vollrohre 10 und der Bohrung 4 bildet, ist durch Filterkies verfüllt, wodurch eine Ringraumschüttung 5 gebildet wird. Des Weiteren ist in einer vorbestimmten axialen Tiefe der Bohrung 4 eine Tonsperrschicht 6 vorgesehen, die durch Quellton-Partikel gebildet wird.

Die Vorrichtung 1 lässt sich dank der radialen Abstandshalter 28 zentriert innerhalb der Bohrung 4 einsetzen. Von Vorteil hierbei ist, wenn ein Pegelrohr 30 an den radialen Abstandshaltern 28 angebracht ist und hierbei parallel zu den Vollrohren 10 verläuft. In dieser Weise bilden die Vorrichtung 1 mit ihren Vollrohren 10 und das Pegelrohr 30 eine Einheit, die gemeinsam - zwecks einer vereinfachten Montage - in die Bohrung 4 des Brunnens 2 eingebracht werden können.

Wie vorstehend bereits erläutert, ist an die Pumpeinrichtung 18 die Verbindungsleitung 20 angeschlossen, die durch die Vollrohre 10 nach oben verläuft und aus dem Brunnen 2 heraus an eine Oberfläche geführt ist. Entsprechend kann bei einem Betrieb der Pumpeinrichtung 18 Wasser aus dem Brunnen 2 durch die Verbindungsleitung 20 ausgetragen werden.

An dieser Stelle darf darauf hingewiesen werden, dass die Darstellungen in der Zeichnung nicht maßstäblich sind. Gleichwohl ist für die Erfindung von Bedeutung, dass eine Längserstreckung der Vollrohre 10, d.h. ein Axiallängenabschnitt A_{V}, in dem das zumindest eine Vollrohr 10 vorgesehen ist, einem vielfachen Wert eines Axiallängenabschnitts A_{F}, in dem das zumindest eine Filterrohr vorgesehen ist, entspricht. Die Axiallängenabschnitte A_{V} und A_{F} sind in Fig. 2 entsprechend gekennzeichnet.

Einzelheiten bezüglich des Filterrohrs 12 sind in Fig. 3 gezeigt. Das Filterrohr 12 ist aus einem Edelstahl-Wickeldrahtfilter hergestellt. Ein Durchmesser D₁₂ des Filterrohrs 12 ist kleiner als ein Durchmesser D₁₀ des Vollrohrs 10. In Entsprechung dessen ist eine radiale Erstreckung von Filterkies innerhalb der Bohrung 4 angrenzend an das Filterrohr 12 größer als die radiale Erstreckung von Filterkies angrenzend an das Vollrohr 10. Dies hat zur Folge, dass Wasser, bevor es tatsächlich in das Filterrohr 12 eintritt, eine längere Strecke an Filterkies durchströmt und dadurch stärker gereinigt wird. Des Weiteren ist in der Fig. 3 durch einen geschwungenen Pfeil symbolisiert, dass Wasser aus dem Innern des Filterrohrs 12 nach oben in das Vollrohr 10 strömen kann. Diesbezüglich versteht sich, dass das Wasser, nachdem es in das Vollrohr 10 eingetreten ist, in radialer Richtung gleichmäßig an den Aufsitzblöcken 23 vorbeiströmt und anschließend in den Einlaufbereich 18_{E} der Pumpeinrichtung 18 eintritt.

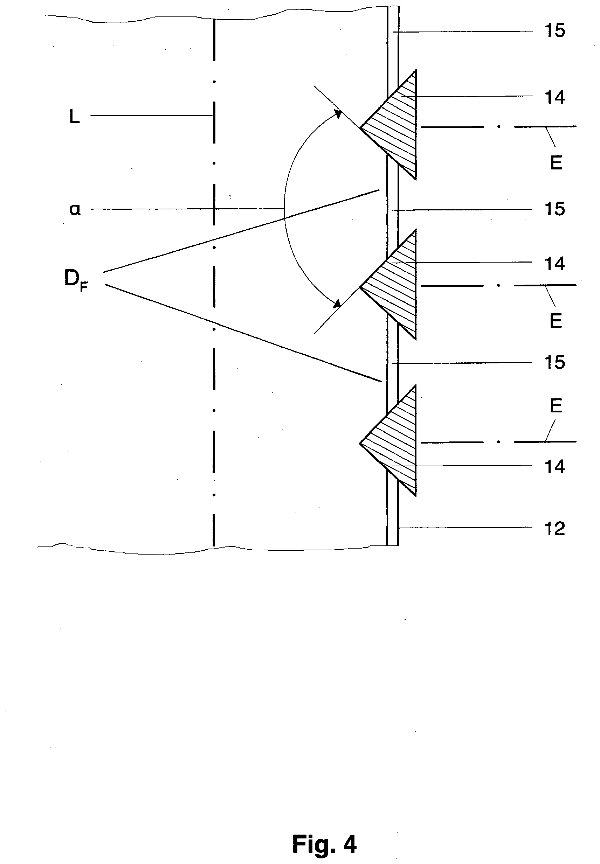

Die Ausgestaltung des Filterrohrs 12 in Form eines Wickeldrahtfilters ist in der Fig. 4 gezeigt, die eine vereinfachte Querschnittsansicht einer Wandung des Filterrohrs 12 veranschaulicht. Das Filterrohr 12 weist entlang seiner Längachse L eine Mehrzahl von Wickeldrähten 14 auf, die parallel zueinander beanstandet angeordnet sind. Die einzelnen Wickeldrähte 14 sind jeweils in einer Ebene E, die senkrecht zur Längsachse L der Vorrichtung 1 ist, angeordnet und verlaufen jeweils entlang des Umfangs des Filterrohrs 12. Hierbei sind die Wickeldrähte 14 jeweils an Stützstegen 15 angebracht bzw. befestigt, die sich parallel zur Längsachse L der Vorrichtung 1 erstrecken. Zur Vereinfachung und wegen der Symmetrie des Filterrohrs 12 bezüglich seiner Längsachse L ist in Fig. 4 nur der rechte Teil eines Filterrohrs 12 dargestellt.

Die Randbereiche der Wickeldrähte 14 sind derart ausgebildet, dass ein Durchlass D_{F} zwischen jeweils zwei aneinander angrenzenden Wickeldrähten 14 radial nach innen zunimmt. Bei der in Fig. 4 gezeigten Ausführungsform hat der Durchlass D_{F} radial nach innen gerichtet einen Öffnungswinkel α von 90°. Eine solche Ausgestaltung des Durchlasses D_{F} mit einem radial nach innen zunehmenden Öffnungswinkel α hat zur Folge, dass Sandkörner, Sedimente oder dergleichen sich zwischen den Wickeldrähten 14 nur in geringem Maße oder gar nicht festsetzen können und dadurch ein Verstopfen des Filterrohrs 12 durch solche Partikel unterbunden ist. Entsprechend ist für das Filterrohr 12 beim Betrieb der Vorrichtung 1 ein gleichmäßig konstanter und hoher Wasserdurchsatz gewährleistet.

Abweichend von der Darstellung in Fig. 4 können die Randbereiche von gegenüberliegenden Wickeldrähten 14 auch derart ausgebildet sein, dass der Öffnungswinkel des dazwischen ausgebildeten Durchlasses D_{F} andere Werte als 90° annimmt, beispielsweise von zumindest 45°, weiter bevorzugt von zumindest 60°. Jedenfalls sollte dieser Öffnungswinkel α radial nach innen zunehmen, so dass wie erläutert ein Verstopfen der Durchlässe D_{F} zwischen den Wickeldrähten 14 durch Sedimente oder dergleichen nicht auftritt.

Bezüglich der soeben erläuterten Durchlässe D_{F} zwischen Wickeldrähten 14 des Filterrohrs 12 darf darauf hingewiesen werden, dass sich hierbei die Beschaffenheit des Filterrohrs 12 aus Edelstahl vorteilhaft in der Weise auswirkt, dass für die Wickeldrähte 14 eine ausreichend hohe Stabilität gewährleistet und ein gleichmäßiger Abstand dazwischen für einen konstanten Durchlass D_{F} sichergestellt ist. Weiters ist dadurch auch eine vereinfachte Reinigung des Filterrohrs 12 zu Wartungszwecken oder dergleichen möglich, ohne dabei die Wickeldrähte 14 zu schädigen.

Eine vorteilhafte Längenproportion der Vorrichtung 1, wonach das Filterrohr 12 eine vergleichsweise geringe axiale Länge aufweist, kann weiter dadurch definiert sein, dass der Axiallängenabschnitt A_{F}, in dem das zumindest eine Filterrohr vorgesehen ist, maximal dem zehnfachen (10-fachen) Wert, vorzugsweise maximal dem fünffachen (5-fachen) Wert, und weiter vorzugsweise maximal dem doppelten Wert des Durchmessers D₁₂ des Filterrohrs 12 entspricht. Ein gewünschter Mindestdurchsatz von Wasser, welches radial von außen in das Filterrohr 12 einströmen soll, kann bei einer verringerten axialen Länge des Filterrohrs 12 durch entsprechend große Durchlässe D_{F} zwischen den Wickeldrähten 14 des Filterrohrs 12 ausgeglichen werden.

### Die Erfindung funktioniert nun wie folgt:

Bei einem Betrieb der Pumpeinrichtung 18 wird Wasser durch das Filterrohr 12 aus dem Brunnen 2 gefördert und anschließend durch die Verbindungsleitung 20 aus dem Brunnen 2 herausgepumpt. Bedingt durch die Beschaffenheit des Vollrohrs 10 kann Wasser, welches unterhalb der Tonsperrschicht 6 die Vorrichtung 1 radial anströmt, nicht direkt radial in das Vollrohr 10 eintreten, sondern strömt an der Außenumfangsfläche 11 des Vollrohrs 10 vertikal nach unten durch die Ringraumschüttung 5. Dies ist in Fig. 2 durch die jeweiligen Pfeile Wₛ symbolisiert. Diese Wasseranteile W_{S} strömen somit vertikal nach unten in Richtung des Filterrohrs 12, und treten dann in Form eines radialen Strömungsanteils Wᵣ in das Filterrohr 12 ein. Im Anschluss daran wird das Wasser durch die Pumpeinrichtung 18 gefördert und wie erläutert durch die Verbindungsleitung 20 aus dem Brunnen 2 ausgetragen bzw. abgepumpt.

Bezüglich der vertikal nach unten gerichteten Wasseranteile Wₛ, die entlang des Vollrohrs 10 vertikal nach unten strömen, darf darauf hingewiesen werden, dass hierbei eine gleichmäßige Strömung vorliegt und insbesondere keine Verwirbelung des Wassers auftritt. Dies hat zur Folge, dass das Wasser keinen Kontakt mit Sauerstoff hat und somit in dem Wasser auch kein zusätzlicher Sauerstoff gelöst wird.

Vorstehend ist bereits darauf hingewiesen worden, dass die Vorrichtung 1 entlang ihrer Längsachse L eine Mehrzahl von Vollrohren 10 aufweisen kann, die an ihren Stirnseiten miteinander verbunden sind. In dieser Weise ist es möglich, für die Vorrichtung einen großen Axiallängenabschnitt A_{V}, in dem die Vollrohre 10 vorgesehen sind, zu realisieren.

Das Verbinden einer Mehrzahl von Vollrohren 10 kann durch ein System 100 erfolgen, bei dem an einem Rohrelement 110 an einer Wandung angrenzend zu dessen Stirnseite zumindest ein Halteelement 114 ausgebildet ist. Des Weiteren sieht ein solches System bei einem zweiten Rohrelement 112 eine Kulissenführung 116 vor, die im Bereich einer Wandung des zweiten Rohrelements 112 und angrenzend zu dessen Stirnseite ausgebildet ist.

Für die nachfolgende Erläuterung der Rohrelemente 110,112 kann davon ausgegangen werden, dass es sich hierbei um jeweilige Vollrohre 10 der Vorrichtung 1 handeln kann.

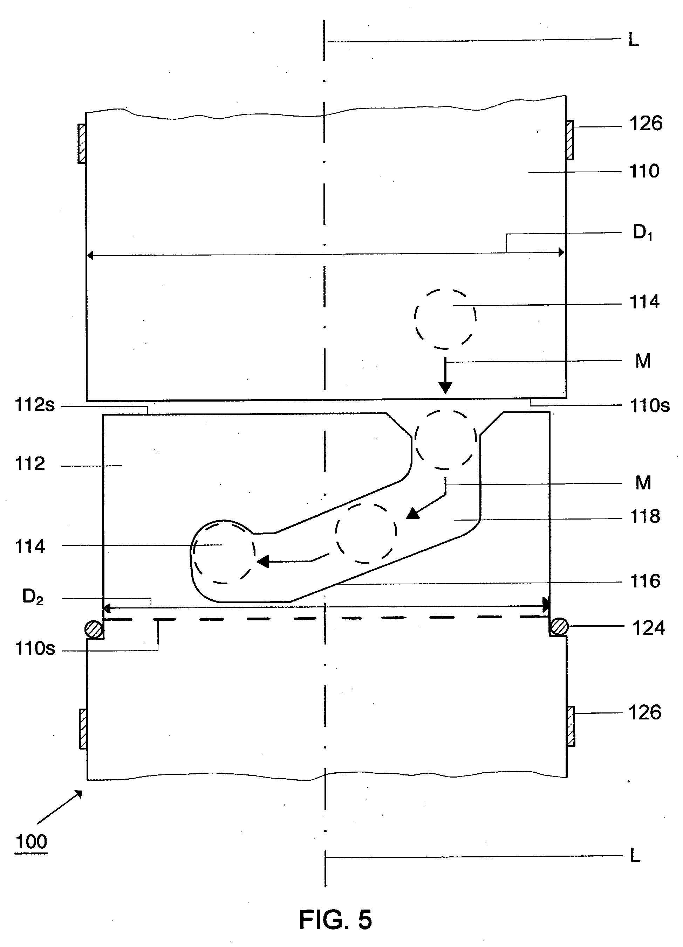

Die Rohrelemente 110, 112 sind in der Fig. 5 in einer Seitenansicht dargestellt, nämlich mit ihren einander gegenüberliegenden Stirnseiten 110ₛ, 112ₛ. Das Halteelement 114 ist an der Wandung des ersten Rohrelements 110 angrenzend an dessen Stirnseite 110ₛ ausgebildet, nämlich an dessen Innenumfangsfläche. Entsprechend ist das Halteelement 114 von außen nicht sichtbar und in Fig. 5 durch gestrichelte Linien angedeutet.

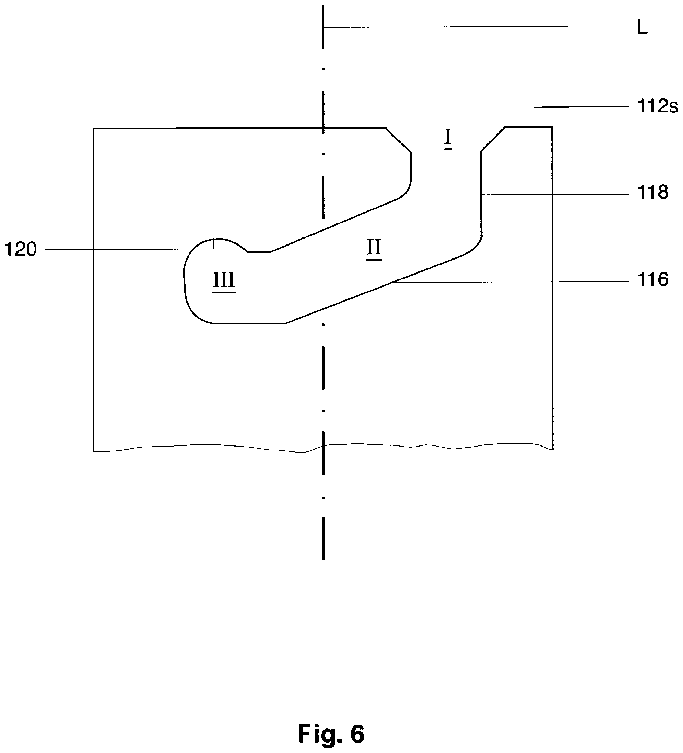

Das zweite Rohrelement 112 ist in der Fig. 6 separat in einer Seitenansicht dargestellt, nämlich mit dessen Stirnseite 112ₛ. Die Kulissenführung 116 ist in der Wandung des zweiten Rohrelements 112 ausgebildet, und weist insgesamt drei Abschnitte I, II und III auf. Im Einzelnen ist der erste Abschnitt I angrenzend zur Stirnseite 112ₛ offen und erstreckt sich parallel zur Längsachse L des zweiten Rohrelements 112. Der zweite Abschnitt II schließt an den ersten Abschnitt I an und erstreckt sich schräg zur Längsachse L des zweiten Rohrelements 112. Der dritte Abschnitt III schließt an den zweiten Abschnitt II an und erstreckt sich quer zur Längsachse des zweiten Rohrelements 112. Indem die Kulissenführung 116 in der Wandung des zweiten Rohrelements 112 ausgebildet ist, ist in der Wandung dieses Rohrelements eine entsprechende Ausnehmung 118 ausgebildet. Des Weiteren umfasst der dritte Abschnitt III der Kulissenführung 116 eine Rastmulde 120, deren Funktion nachstehend noch im Einzelnen erläutert ist.

Die Ansicht nach Fig. 5 verdeutlicht, dass das erste Rohrelement 110 an seiner Stirnseite 110ₛ einen Durchmesser D₁ aufweist. Das zweite Rohrelement 112 weist an seiner Stirnseite 112ₛ einen Durchmesser D₂ auf. Die Abmessungen der Rohrelemente 110, 112 an ihren Stirnseiten sind derart gewählt, dass die Beziehung gilt: D₂ < D₁. Weil der Durchmesser D₂ der Stirnseite 112ₛ des zweiten Rohrelements 112 größer gewählt ist als der Durchmesser D₁ der Stirnseite 110ₛ des ersten Rohrelements 110, kann das erste Rohrelement 110 mit seiner Stirnseite 110ₛ auf das zweite Rohrelement 112 aufgesteckt werden. Dieses Zusammenstecken der beiden Rohrelemente, wodurch das erste Rohrelement 110 an dem zweiten Rohrelement 112 montiert wird, ist in der Fig. 5 durch den Pfeil M symbolisiert.

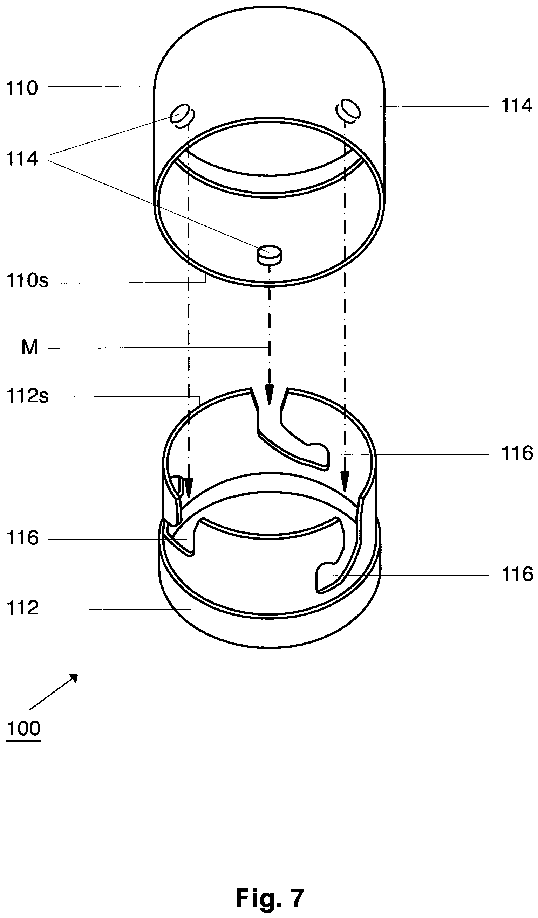

Fig. 7 zeigt die beiden Rohrelemente 110, 112 von Fig. 5 in einer Perspektivansicht. An dem ersten Rohrelement 110 sind an dessen Innenumfangsfläche jeweils drei Halteelemente 114 ausgebildet, die entlang des Umfangs des ersten Rohrelements 110 gleichmäßig zueinander beabstandet sind. In gleicher Weise sind an dem zweiten Rohrelement 112 ebenfalls drei Kulissenführungen 116 vorgesehen, nämlich entlang des Umfangs des zweiten Halteelements 112 in einem gleichmäßigen Abstand zueinander.

In Fig. 7 ist durch den Pfeil M eine Montage des ersten Rohrelements 110 an dem zweiten Rohrelement 112 symbolisiert. Hierbei werden die beiden Rohrelemente 110, 112 zunächst koaxial zueinander positioniert, wobei beispielsweise das erste Rohrelement 110 oberhalb des zweiten Rohrelements 112 positioniert ist und die Halteelemente 114 des ersten Rohrelements 110 jeweils mit den ersten Abschnitten I der jeweiligen Kulissenführungen 116 des zweiten Rohrelements 112 ausgerichtet sind. Ausgehend von der in Fig. 7 gezeigten Ausgangsposition der beiden Rohrelemente 110, 112 kann dann ein Verbinden dieser Rohrelemente in der Weise erfolgen, dass das erste Rohrelement 110 in Richtung des zweiten Rohrelements 112 bewegt wird bzw. auf das zweite Rohrelement 112 abgesenkt wird.

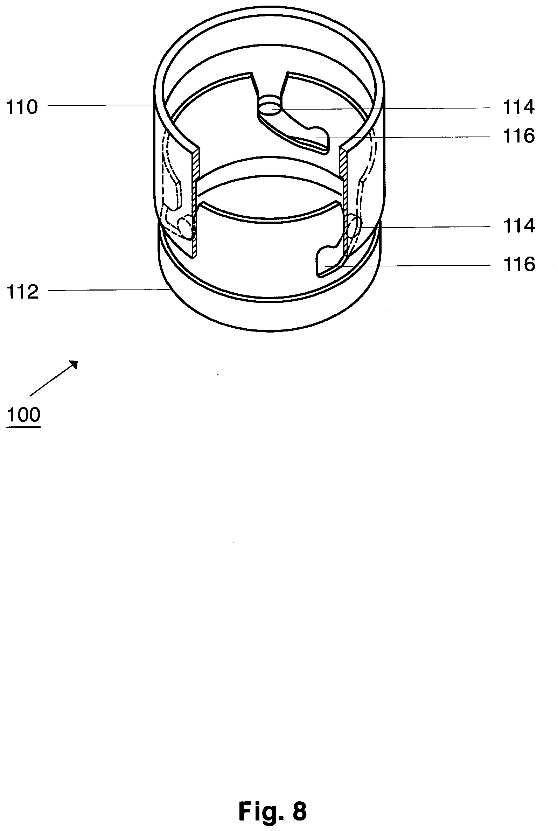

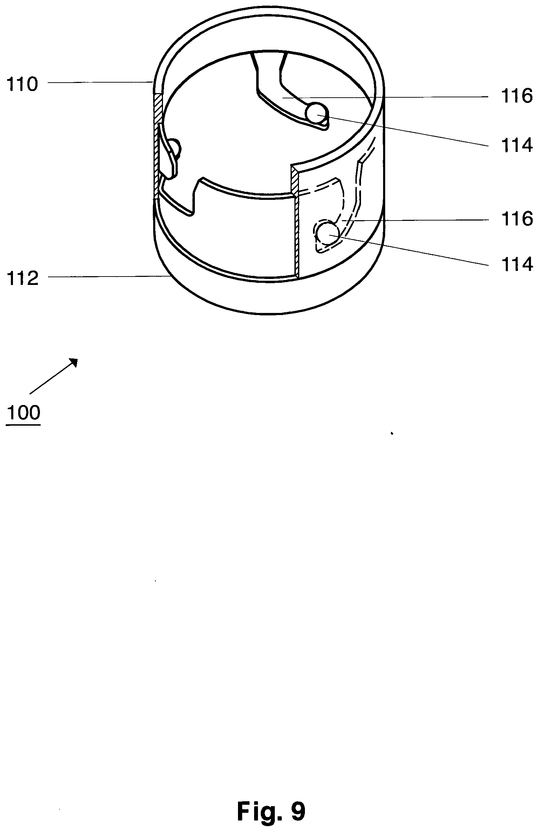

Durch die Perspektivansichten der Fig. 7-9 ist der Ablauf einer Montage der beiden Rohrelemente 110, 112 an ihren Stirnseiten gezeigt. Sobald die Stirnseite 110ₛ des ersten Rohrelements 110 die Stirnseite 112ₛ des zweiten Rohrelements 112 übergreift, treten die Halteelemente 114 in den ersten Abschnitt I der jeweiligen Kulissenführungen 116 des zweiten Rohrelements 112 ein (Fig. 8). Anschließend gelangen die Halteelemente 114 durch den zweiten Abschnitt II der jeweiligen Kulissenführungen 116 automatisch in deren dritten Abschnitt III (Fig. 9). Sobald die Halteelemente 114 sich in dem dritten Abschnitt III der Kulissenführungen 116 befinden, kann durch ein weiteres Verdrehen der Rohrelemente 110, 112 relativ zueinander bewirkt werden, dass die Halteelemente 114 in den jeweiligen Rastmulden 120 aufgenommen werden und dort einrasten. Im Ergebnis sind dann die beiden Rohrelemente 110, 112 sowohl axial zueinander, d.h. in Richtung von deren Längsachse L festgelegt, als auch gegen eine selbsttätige Rotation relativ zueinander gesichert. In dieser Weise ist eine betriebssichere Verbindung der beiden Rohrelemente 110, 112 an ihren gegenüberliegenden Stirnseiten 110ₛ, 112ₛ sichergestellt.

Die Positionierung des ersten Halteelements 110 gemäß der Darstellung von Fig. 9, wonach dessen Stirnseite 110ₛ auf die Stirnseite 112ₛ des zweiten Rohrelements 112 gesteckt ist, ist in der Fig. 5 zusätzlich durch die gestrichelt dargestellte Stirnseite 110ₛ des ersten Rohrelements 110 angedeutet. Des Weiteren sind in der Fig. 5 die verschiedenen Positionen des Halteelements 114 innerhalb der Kulissenführung 116 während einer Montage der beiden Rohrelemente 110, 112 angedeutet.

An den Außenumfangsflächen des ersten und zweiten Rohrelements 110, 112 können Raststege 126 (Fig. 5) ausgebildet sein. Diese Raststege 126 dienen in Verbindung mit einem (nicht gezeigten) Werkzeug zu dem Zweck, dass die Rohrelemente 110, 112, nachdem bei einer Montage die Halteelemente 114 in den dritten Abschnitt III der Kulissenführungen 116 gelangt sind, relativ zueinander verdreht werden können, so dass dann die Halteelemente 114 wie erläutert in den Rastmulden 120 einrasten. Hierbei kann mittels eines geeigneten Werkzeugs und in Wechselwirkung mit den Raststegen 126 ein Moment um die Längsachse L der Rohrelemente 110, 112 erzeugt werden. Des Weiteren darf darauf hingewiesen werden, dass die Abstandshalter 28 (Fig. 1) mit den Raststegen 126 formschlüssig verbunden werden können, wobei die Raststege 126 zu diesem Zweck eine geeignete Nut aufweisen können.

Nachdem die beiden Rohrelemente 110, 112 miteinander verbunden sind, wird ein Abstandselement in Form eines O-Rings 124 (vgl. Fig. 5) zwischen den Rohrelementen 110, 112 angeordnet, nämlich innerhalb einer Nut, die sich zwischen den Rohrelementen 110, 112 im Bereich von deren Außenumfangsfläche bilden kann. Durch diesen O-Ring 124 ist sichergestellt, dass die Rohrelemente 110, 112 einen vorbestimmten Abstand zueinander aufweisen und nicht "auf Block" liegen. Hierdurch wird das Halteelement 114 innerhalb der Rastmulde 120 gehalten und eine selbsttätige Verdrehung der beiden Rohrelemente 110,112 relativ zueinander verhindert, so dass im Ergebnis eine betriebssichere Verbindung der beiden Rohrelemente 110, 112 an ihren Stirnseiten 110ₛ, 112ₛ gewährleistet ist.

Ein Lösen der beiden Rohrelemente 110, 112 kann ausgehend von dem in Fig. 9 gezeigten Zustand in einfacher Weise dadurch erfolgen, dass die Rohrelemente 110, 112 relativ zueinander um ihre Längsachse L derart verdreht werden, dass die Halteelemente 114 außer Eingriff von den Rastmulden 120 gelangen. Zu diesem Zweck wird der O-Ring 124 zuvor aus der Nut zwischen den beiden Rohrelementen entfernt, z.B. mit Hilfe eines geeigneten Werkzeugs in Form eines Hakens oder dergleichen. Anschließend gleiten dann bei einer weiteren Verdrehung der Rohrelemente 110, 112 die Halteelemente 114 durch den dritten Abschnitt III und den zweiten Abschnitt II der jeweiligen Kulissenführungen 116 bis in deren ersten Abschnitt I. Sobald sich die Halteelemente 114 innerhalb des ersten Abschnitts I der jeweiligen Kulissenführungen 116 befinden, können die Rohrelemente 110, 112 axial, d.h. entlang ihrer Längsachse L voneinander wegbewegt werden. In Folge dessen bewegen sich dann die Halteelemente 114 aus dem ersten Abschnitt I der jeweiligen Kulissenführungen 116 heraus nach außen, wodurch die Rohrelemente 110, 112 vollständig voneinander gelöst werden können.

Unter Bezugnahme auf die obige Erläuterung, wonach Rohrelemente 110, 112 entweder an ihren Stirnseiten miteinander verbunden oder auch wieder voneinander gelöst werden können, ist es für die erfindungsgemäße Vorrichtung 1 demnach möglich, eine Mehrzahl von Vollrohren 10 an ihren Stirnseiten miteinander zu verbinden, um für die Vorrichtung 1 einen möglichst großen Axiallängenabschnitt A_{V} zu erzielen. Im Anschluss an ein Ziehen der Vorrichtung 1 heraus aus der Bohrung 4 des Brunnens 2 können die Vollrohre 10 wie erläutert auch wieder voneinander gelöst bzw. demontiert werden. Hierdurch ist beispielsweise ein Transport von einzelnen Vollrohren 10 auf Fahrzeugen oder dergleichen vereinfacht.

Die obige Erläuterung in Bezug auf ein Verbinden und Lösen von Rohrelementen 110, 112 gilt für die erfindungsgemäße Vorrichtung 1 auch in gleicher Weise für ein Verbinden einer Mehrzahl von Filterrohren 12, falls ein entsprechend großer Axiallängenabschnitt A_{F}, in dem das Filterrohr 12 vorzusehen ist, für einen bestimmten Einsatzzweck der Vorrichtung 1 notwendig sein sollte. Schließlich ist es auch möglich, die Hebekappe 24 gemäß der obigen Erläuterung des Systems 100 an einer oberen Stirnseite 17 eines Vollrohrs anzubringen oder davon zu demontieren.

## Patentansprüche

1. Vorrichtung (1) zum Fördern von Wasser aus einem Brunnen (2) zur Wasserhaltung oder Wassersenkung bei einem Tiefbau-Bauwerk, umfassend
zumindest ein längliches Vollrohr (10), das vertikal in eine Bohrung (4) des Brunnens (2) einbringbar ist,
zumindest ein aus Edelstahl hergestelltes Filterrohr (12), wobei das Filterrohr (12) in Form eines Wickeldrahtfilters (14, 15) ausgebildet ist und ein Durchmesser (D₁₂) des Filterrohrs (12) kleiner als ein Durchmesser (D₁₀) des Vollrohrs (10) ist,
**dadurch gekennzeichnet,**
**dass** das Filterrohr (12) an einer unteren Stirnseite (16) des Vollrohrs (10) angeschlossen ist
**dass** eine Pumpeinrichtung (18) vorgesehen ist, mittels der radial von außen durch das Filterrohr (12) einströmendes Wasser (Wᵣ) abpumpbar ist, und
**dass** innerhalb des Vollrohrs (10) eine Aufstandsfläche (22) ausgebildet ist, wobei die Pumpeinrichtung (18) auf der Aufstandsfläche (22) angebracht ist.

2. Vorrichtung (1) nach Anspruch 1, **dadurch gekennzeichnet, dass** die Aufstandsfläche (22) angrenzend an die untere Stirnseite (16) des Vollrohrs (10) angeordnet und durch einen Bereich der unteren Stirnseite (16) des Vollrohrs (10) ausgebildet ist.

3. Vorrichtung (1) nach Anspruch 1 oder 2, **dadurch gekennzeichnet, dass** an einer oberen Stirnseite (17) eines Vollrohrs (10), das in vertikaler Richtung an der Vorrichtung (1) zuoberst angeordnet ist, eine Hebekappe (24) mit Verbindungsmitteln (26) anbringbar ist, die mit einem Kranhaken oder dergleichen in Verbindung bringbar sind, um auf die Vorrichtung (1) eine Zugkraft in ihrer Längsachse (L) aufzubringen oder die Vorrichtung (1) während einer Montage in der Bohrung (4) des Brunnens (2) zu halten.

4. Vorrichtung (1) nach einem der Ansprüche 1 bis 3, **dadurch gekennzeichnet, dass** ein Axiallängenabschnitt (A_{F}) der Vorrichtung (1), in dem das zumindest eine Filterrohr (12) vorgesehen ist, maximal dem zehnfachen (10-fachen) Wert, vorzugsweise maximal dem fünffachen (5-fachen) Wert, weiter vorzugsweise maximal dem doppelten Wert des Durchmessers (D₁₂) des Filterrohrs (12) entspricht.

5. Vorrichtung (1) nach einem der Ansprüche 1 bis 4, **dadurch gekennzeichnet, dass** das Filterrohr (12) eine Mehrzahl von Wickeldrähten (14) aufweist, die jeweils in einer Ebene senkrecht zur Längsachse der Vorrichtung (1) entlang des Umfangs des Filterrohrs (12) und parallel zueinander beabstandet angeordnet sind, wobei ein Durchlass (D_{F}) zwischen jeweils zwei gegenüberliegenden Wickeldrähten (14) radial nach innen zunimmt, vorzugsweise, dass die Randbereiche von zwei jeweils gegenüberliegenden Wickeldrähten (14) radial nach innen einen Durchlass (D_{F}) mit einem Öffnungswinkel (α) von zumindest 45°, bevorzugt von zumindest 60°, weiter bevorzugt von zumindest 90° bilden.

6. Vorrichtung (1) nach einem der Ansprüche 1 bis 5, **dadurch gekennzeichnet, dass** an einer Außenumfangsfläche (11) des Vollrohrs (10) in zumindest einer senkrecht zur Längsachse (L) des Vollrohrs (10) verlaufenden Ebene (E) eine Mehrzahl von radialen Abstandshaltern (28) angebracht sind, durch die das Vollrohr (10) innerhalb der Bohrung (4) des Brunnens (2) zentrierbar ist, vorzugsweise, dass die radialen Abstandshalter (28) in einer Mehrzahl von zueinander parallelen Ebenen (E) entlang der Längsachse (L) des Vollrohrs (10) vorgesehen sind, wobei an zumindest einem Abstandshalter (28) ein parallel zum Vollrohr (10) verlaufendes Pegelrohr (30) angebracht ist.

7. Vorrichtung (1) nach einem der Ansprüche 1 bis 6, **dadurch gekennzeichnet, dass** oberhalb des Vollrohrs (10) an dessen oberer Stirnseite (17) zumindest ein weiteres Vollrohr (10) anschließbar ist, wobei an der Wandung des einen Vollrohrs (10) angrenzend an eine Stirnseite davon ein Halteelement (114) und im Bereich der Wandung des anderen Vollrohrs (10) angrenzend an eine Stirnseite davon eine Kulissenführung (116) ausgebildet sind, wobei die beiden Vollrohre (110) mit ihren Stirnseiten, an denen jeweils das Halteelement (114) und die Kulissenführung (116) ausgebildet sind, derart zusammensteckbar sind, dass dabei das Halteelement (114) formschlüssig mit der Kulissenführung (116) in Eingriff gelangen kann.

8. Vorrichtung (1) nach einem der Ansprüche 3 bis 7, **dadurch gekennzeichnet, dass** an der Wandung der Hebekappe (24) oder des Vollrohrs (10) angrenzend an eine Stirnseite davon ein Halteelement (114) ausgebildet ist, wobei im Bereich der Wandung des Vollrohrs (10) oder der Hebekappe (24) angrenzend an eine Stirnseite davon eine Kulissenführung (116) ausgebildet ist, wobei die Hebekappe (24) und das Vollrohr (10) mit ihren Stirnseiten, an denen jeweils das Halteelement (114) und die Kulissenführung (116) ausgebildet sind, derart zusammensteckbar sind, dass dabei das Halteelement (114) formschlüssig mit der Kulissenführung (116) in Eingriff gelangen kann.

9. Vorrichtung (1) nach einem der Ansprüche 1 bis 8, **dadurch gekennzeichnet, dass** das zumindest eine Filterrohr (12) an seiner unteren Stirnseite mit einem weiteren Filterrohr (12) verbindbar ist, wobei an der Wandung des einen Filterrohrs (12) angrenzend an eine Stirnseite davon ein Halteelement (114) und im Bereich der Wandung des anderen Filterrohrs (12) angrenzend an eine Stirnseite davon eine Kulissenführung (116) ausgebildet sind, wobei die beiden Filterrohre (12) mit ihren Stirnseiten, an denen jeweils das Halteelement (114) und die Kulissenführung (116) ausgebildet sind, derart zusammensteckbar sind, dass dabei das Halteelement (114) formschlüssig mit der Kulissenführung (116) in Eingriff gelangen kann.

10. Vorrichtung (1) nach einem der Ansprüche 7 bis 9, **dadurch gekennzeichnet, dass** die Kulissenführung (116) umfasst:
- einen ersten Abschnitt (I), der angrenzend zur Stirnseite des Rohrelements in Form des Vollrohrs (10), des Filterrohrs (12) bzw. der Hebekappe (24) offen ist und sich parallel zur Längsachse (L) des Rohrelements erstreckt,
- einen zweiten Abschnitt (II), der an den ersten Abschnitt (I) anschließt und sich schräg zur Längsachse (L) des Rohrelements erstreckt, und
- einen dritten Abschnitt (III), der an den zweiten Abschnitt (II) anschließt und sich quer zur Längsachse (L) des Rohrelements erstreckt,
wobei der dritte Abschnitt (III) der Kulissenführung (116) eine Rastmulde (120) aufweist, in der das Halteelement (114) verrastbar ist, wobei das Rohrelement, wenn das Halteelement (114) in der Rastmulde (120) aufgenommen ist, gegen eine selbsttätige Verdrehung relativ zum daran angrenzenden Rohrelement blockiert und in axialer Richtung parallel zur Längsachse bezüglich der Vorrichtung (1) festgelegt ist, so dass ein axiales Bewegen dieses Rohrelements relativ zu dem daran angrenzenden Rohrelement parallel zur Längsachse (L) der Vorrichtung (1) nicht möglich ist.

11. Verfahren zum Fördern von Wasser aus einem Brunnen (2) zur Wasserhaltung oder Wassersenkung bei einem Tiefbau-Bauwerk, bei dem eine Vorrichtung (1) nach einem der Ansprüche 1 bis 10 eingesetzt wird, wobei Wasser (Wᵣ) bei einem Betrieb der Pumpeinrichtung (18) radial von außen in das Filterrohr (12) einströmt und anschließend durch das zumindest eine Vollrohr (10) aus dem Brunnen abgepumpt wird, wobei Wasser (Wₛ), bevor es radial von außen in das Filterrohr (12) eintritt, eine Ringraumschichtung (5) des Brunnens (2) vertikal nach unten in Richtung des Filterrohrs (12) durchströmt,
wobei ein Durchmesser (D₁₂) des Filterrohrs (12) der Vorrichtung (1) nach einem der Ansprüche 1 bis 10 kleiner ist als ein Durchmesser (D₁₀) des Vollrohrs (10) dieser Vorrichtung (1), so dass die Ringraumschüttung (5) des Brunnens (2) angrenzend an das zumindest eine Filterrohr (12) der Vorrichtung (1) im Vergleich zur Ringraumschüttung (5) des Brunnens (2) angrenzend an das zumindest eine Vollrohr (10) der Vorrichtung (1) eine größere radiale Erstreckung aufweist.

12. Verfahren nach Anspruch 11, **dadurch gekennzeichnet, dass** ein Axiallängenabschnitt (Aᵥ), in dem das zumindest eine Vollrohr (10) der Vorrichtung (1) nach einem der Ansprüche 1 bis 10 in einer Bohrung (4) des Brunnens (2) vertikal unterhalb einer Tonsperrschicht (6) des Brunnens (2) verläuft, einem Vielfachen des Durchmessers (D₁₀) des Vollrohrs (10) entspricht, so dass Wasser aus einem Bereich des Brunnens (2) unterhalb der Tonsperrschicht (6) vertikal nach unten entlang einer Außenumfangsfläche (11) des Vollrohrs (10) und durch die Ringraumschichtung (5) des Brunnens (2) strömt, bevor es anschließend radial von außen in das Filterrohr (12) eintritt.

13. Verfahren nach Anspruch 12, **dadurch gekennzeichnet, dass** das Wasser (Wₛ), welches vertikal nach unten entlang der Außenumfangsfläche (11) des Vollrohrs (10) und durch die Ringraumschichtung (5) strömt und anschließend radial von außen in das Filterrohr (12) eintritt, in Folge dessen, dass der Axiallängenabschnitt (Aᵥ), in dem das zumindest eine Vollrohr (10) der Vorrichtung (1) in der Bohrung (4) des Brunnens (2) vertikal unterhalb von dessen Tonsperrschicht (6) verläuft, einem Vielfachen des Durchmessers (D₁₀) des Vollrohrs (10) entspricht, dabei weder verwirbelt noch mit Sauerstoff angereichert wird.

14. Verfahren nach einem der Ansprüche 11 bis 13, **dadurch gekennzeichnet, dass** ein Axiallängenabschnitt (A_{V}), in dem das zumindest eine Vollrohr (10) der Vorrichtung (1) nach einem der Ansprüche 1 bis 10 vorgesehen ist, zumindest dem doppelten Wert, vorzugsweise zumindest dem fünffachen (5-fachen) Wert, weiter vorzugsweise zumindest dem zehnfachen (10-fachen) Wert, weiter vorzugsweise zumindest dem zwanzigfachen (20-fachen) Wert eines Axiallängenabschnitts (A_{F}), in dem das zumindest eine Filterrohr (12) der Vorrichtung (1) nach einem der Ansprüche 1 bis 10 vorgesehen ist, entspricht.

## Claims

1. A device (1) for conveying water from a well (2) for dewatering or reducing water in a civil engineering construction, comprising
at least an elongated blank casing (10) which can be vertically introduced into a bore (4) of the well (2),
at least a filter tube (12) made of stainless steel, wherein the filter tube (12) is formed as a continuous slot screen (14, 15), and a diameter (D₁₂) of the filter tube (12) is smaller than a diameter (D₁₀) of the blank casing (10),
**characterized in**
**that** the filter tube (12) is connected at a lower front side (16) of the blank casing (10),
**that** a pumping device (18) is provided by means of which water (Wᵣ) flowing radially from the outside through the filter tube (12) can be pumped out, and
**that** within the blank casing (10) a contact surface (22) is formed, wherein the pumping device (18) is installed on the contact surface (22).

2. The device (1) according to claim 1, **characterized in that** the contact surface (22) is located adjacent to the lower front side (16) of the blank casing (10) and is formed by an area of the lower front side (16) of the blank casing (10).

3. The device (1) according to claim 1 or 2, **characterized in that** on an upper front side (17) of a blank casing (10), which in vertical direction is located on the device (1) at the top, a lifting cap (24) can be attached with connecting means (26), which can be connected to a crane hook or similar in order to apply a tension load on the device (1) in its longitudinal axis (L) or to maintain the device (1) during an assembly in the bore (4) of the well (2).

4. The device (1) according to any one of claims 1 to 3, **characterized in that** a longitudinal axial section (A_{F}) of the device (1), in which the at least one filter tube (12) is provided, at most corresponds to ten times the value, preferably at most five times the value, more preferably at most corresponds to twice the value of the diameter (D₁₂) of the filter tube (12).

5. The device (1) according to any one of claims 1 to 4, **characterized in that** the filter tube (12) comprises a plurality of winding wires (14), which are each located in a plane perpendicular to the longitudinal axis of the device (1) along the circumference of the filter tube (12) and spaced apart parallel to each other, wherein an orifice (D_{F}) between two opposite winding wires (14) each increases radially inwards, preferably that the border areas of two opposite winding wires (14) each form radially inwards an orifice (D_{F}) with an aperture angle (α) of at least 45°, preferably of at least 60°, more preferably of at least 90°.

6. The device (1) according to any one of claims 1 to 5, **characterized in that** on an outer peripheral surface (11) of the blank casing (10) in at least a plane perpendicular to the longitudinal axis (L) of the blank casing (10), a plurality of radial spacers (28) are attached, through which the blank casing (10) can be centred within the bore (4) of the well (2), preferably that the radial spacers (28) are provided in a plurality of planes (E) parallel to each other along the longitudinal axis (L) of the blank casing (10), wherein on at least one spacer (28) a level tube (30) is attached parallel to the blank casing (10).

7. The device (1) according to any one of claims 1 to 6, **characterized in that** above the blank casing (10) on its upper front side (17) at least a further blank casing (10) can be connected, wherein on the wall of said one blank casing (10) adjacent to a front side of same a retaining element (114), and in the area of the wall of the other blank casing (10) adjacent to a front side of same a slide guide (116) is formed, wherein the two blank casings (10) with their front sides, on which the retaining element (114) and the slide guide (116) each are formed, can be put together such that the retaining element (114) can engage into the slide guide (116) in a positive fit.

8. The device (1) according to any one of claims 3 to 7, **characterized in that** on the wall of the lifting cap (24) or the blank casing (10) adjacent to a front side of it, a retaining element (114) is formed, wherein in the area of the wall of the blank casing (10) or the lifting cap (24) adjacent to a front side of it a slide guide (116) is formed, wherein the lifting cap (24) and the blank casing (10) with their front sides on which the retaining element (114) and the slide guide (116) each are formed, can be put together such that the retaining element (114) can engage into the slide guide (116) in a positive fit.

9. The device (1) according to any one of claims 1 to 8, **characterized in that** the at least one filter tube (12) on its lower front side can be connected to a further filter tube (12), wherein on the wall of said one filter tube (12) adjacent to a front side of same a retaining element (114) and in the area of the wall of the other filter tube (12) adjacent to a front side of same a slide guide (116) are formed, wherein the two filter tubes (12) with their front sides, on which the retaining element (114) and the slide guide (116) each are formed, can be put together such that the retaining element (114) can engage into the slide guide (116) in a positive fit.

10. The device (1) according to any one of claims 7 to 9, **characterized in that** the slide guide (116) comprises:
- a first portion (I), which adjacent to the front side of the tube element in the form of the blank casing (10), the filter tube (12) and/or the lifting cap (24) is open, and extends parallel to the longitudinal axis (L) of the tube element,
- a second portion (II), which follows to the first portion (I), and extends obliquely to the longitudinal axis (L) of the tube element, and
- a third portion (III), which follows to the second portion (II), and extends transversely to the longitudinal axis (L) of the tube element, wherein the third portion (III) of the slide guide (116) comprises a catch recess (120) into which the retaining element (114) can be locked, wherein the tube element, when the retaining element (114) is received in the catch recess (120), is blocked against automatic twisting relative to the adjacent tube element, and is fixed in axial direction parallel to the longitudinal axis relative to the device (1), so that axial movement of said tube element relative to the adjacent tube element parallel to the longitudinal axis (L) of the device (1) is not possible.

11. A method (1) for conveying water from a well (2) for dewatering or reducing water in a civil engineering construction, in which a device (1) according to any one of claims 1 to 10 is used, wherein water (Wᵣ) during operation of the pumping device (18) flows radially from the outside into the filter tube (12), and subsequently is pumped out of the well through the at least one blank casing (10), wherein water (Wₛ) before it enters the filter tube (12) radially from outside, flows through an annulus fill (5) of the well (2) vertically downwards in the direction of the filter tube (12),
wherein a diameter (D₁₂) of the filter tube (12) of the device (1) according to any one of claims 1 to 10 is smaller than a diameter (D₁₀) of the blank casing (10) of said device (1) so that the annulus fill (5) of the well (2) adjacent to the at least one filter tube (12) of the device (1) compared with the annulus fill (5) of the well (2) adjacent to the at least one blank casing (10) of the device (1) has a greater radial extension.

12. The method (1) according to claim 11, **characterized in that** a longitudinal axial section (A_{V}) in which the at least one blank casing (10) of the device (1) according to any one of claims 1 to 10 extends in a bore (4) of the well (2) vertically below a clay barrier layer (6) of the well (2), corresponds to a multiple of the diameter (D₁₀) of the blank casing (10) so that water from an area of the well (2) below the clay barrier layer (6) flows vertically downwards along an outer peripheral surface (11) of the blank casing (10) and through the annulus fill (5) of the well (2) before subsequently it enters the filter tube (12) radially from outside.

13. The method (1) according to claim 12, **characterized in that** the water (Wₛ), which flows vertically downwards along the outer peripheral surface (11) of the blank casing (10) and through the annulus fill (5), and subsequently enters the filter tube (12) radially from outside, due to the fact that the longitudinal axial section (Aᵥ), in which the at least one blank casing (10) of the device (1) in the bore (4) of the well (2) extends vertically below its clay barrier layer (6), corresponds to a multiple of the diameter (D₁₀) of the blank casing (10), neither swirls nor is oxygenated in the process.

14. The method (1) according to any one of claims 11 to 13, **characterized in that** a longitudinal axial section (A_{V}) in which the at least one blank casing (10) of the device (1) according to any one of claims 1 to 10 is provided corresponds at least to twice the value, preferably at least to five times the value, more preferably at least to ten times the value, more preferably at least to twenty times the value of a longitudinal axial section (A_{F}) in which the at least one filter tube (12) of the device (1) according to any one of claims 1 to 10 is provided.

## Revendications

1. Dispositif (1) pour refouler de l'eau d'un puits (2) pour l'épuisement ou l'abaissement du niveau de l'eau dans un ouvrage de génie civil, comportant
au moins un tube plein (10) oblong qui peut être introduit verticalement dans un percement (4) du puits (2),
au moins un tube-filtre (12) réalisé en acier inoxydable, dans lequel le tube-filtre (12) est réalisé sous la forme d'un filtre à fil enroulé (14, 15) et un diamètre (D₁₂) du tube-filtre (12) est inférieur à un diamètre (D₁₀) du tube plein (10),
**caractérisé en ce**
**que** le tube-filtre (12) est raccordé à une face avant inférieure (16) du tube plein (10),
**qu'**un moyen de pompage (18) est prévu par lequel de l'eau (Wᵣ) arrivant radialement de l'extérieur par le tube-filtre (12) peut être évacuée, et
**que** dans le tube plein (10) une surface de pose (22) est formée, dans lequel le moyen de pompage (18) est placé sur la surface de pose (22).

2. Dispositif (1) selon la revendication 1, **caractérisé en ce que** la surface de pose (22) est agencée adjacente à la face avant inférieure (16) du tube plein (10) et est formée par une zone de la face avant inférieure (16) du tube plein (10).

3. Dispositif (1) selon la revendication 1 ou 2, **caractérisé en ce que** sur une face avant supérieure (17) d'un tube plein (10) qui est agencé tout en haut dans la direction verticale du dispositif (1) un capuchon de levage (24) avec des moyens de liaisons (26) peut être monté qui peuvent être reliés avec un crochet de grue ou similaire pour appliquer une force de traction au dispositif (1) dans son axe longitudinal (L) ou pour maintenir le dispositif (1) pendant un montage dans le percement (4) du puits (2).

4. Dispositif (1) selon l'une quelconque des revendications 1 à 3, **caractérisé en ce qu'**une section axiale longitudinale (A_{F}) du dispositif (1), dans laquelle l'au moins un tube-filtre (12) est prévu, correspond au maximum dix fois la valeur, de préférence au maximum cinq fois la valeur, plus préférablement au maximum deux fois la valeur du diamètre (D₁₂) du tube-filtre (12).

5. Dispositif (1) selon l'une quelconque des revendications 1 à 4, **caractérisé en ce que** le tube-filtre (12) comporte une pluralité de fils d'enroulement (14) qui sont agencés chacun dans un plan perpendiculairement à l'axe longitudinal du dispositif (1) le long de la circonférence du tube-filtre (12) et espacés parallèlement les uns aux autres, dans lequel un passage (D_{F}) entre deux fils d'enroulement (14) opposés chacun augmente radialement vers l'intérieur, de préférence que les zones de bord de deux fils d'enroulement (14) opposés chacun forment un passage (D_{F}) radialement vers l'intérieur avec une ouverture angulaire (α) d'au moins 45°, de préférence d'au moins 60°, plus préférablement d'au moins 90°.

6. Dispositif (1) selon l'une quelconque des revendications 1 à 5, **caractérisé en ce que** sur une surface périphérique extérieure (11) du tube plein (10) dans au moins un plan (E) s'étendant perpendiculairement à l'axe longitudinal (L) du tube plein (10) une pluralité des espaceurs radiaux (28) est montée par lesquels le tube plein (10) peut être centré dans le percement (4) du puits (2), de préférence que les espaceurs radiaux (28) sont prévus dans une pluralité de plans (E) parallèles les uns aux autres le long de l'axe longitudinal (L) du tube plein (10), dans lequel sur au moins un espaceur (28) un tube de niveau (30) est monté parallèlement au tube plein (10).

7. Dispositif (1) selon l'une quelconque des revendications 1 à 6, **caractérisé en ce qu'**au-dessus du tube plein (10) sur sa face avant supérieure (17) au moins un autre tube plein (10) peut être raccordé, dans lequel sur la paroi de l'un tube plein (10) adjacent à une face avant de celui-ci un élément de retenue (114) et dans la zone de la paroi de l'autre tube plein (10) adjacent à une face avant de celui-ci un guidage de coulisse (116) sont formés, dans lequel les deux tubes pleins (10) avec leurs faces avant sur lesquelles chacun l'élément de retenue (114) et le guidage de coulisse (116) sont formés, sont emboîtables de sorte que l'élément de retenue (114) ainsi peut se mettre en prise avec le guidage de coulisse (116) à engagement positif.

8. Dispositif (1) selon l'une quelconque des revendications 3 à 7, **caractérisé en ce que** sur la paroi du capuchon de levage (24) ou du tube plein (10) adjacent à une face avant de celui-ci un élément de retenue (114) est formé, dans lequel dans la zone de la paroi du tube plein (10) ou du capuchon de levage (24) adjacent à une face avant de celui-ci un guidage de coulisse (116) est formé, dans lequel le capuchon de levage (24) et le tube plein (10) avec leurs faces avant sur lesquelles chacun l'élément de retenue (114) et le guidage de coulisse (116) sont formés, sont emboîtables de sorte que l'élément de retenue (114) ainsi peut se mettre en prise avec le guidage de coulisse (116) à engagement positif.

9. Dispositif (1) selon l'une quelconque des revendications 1 à 8, **caractérisé en ce que** l'au moins un tube-filtre (12) sur sa face avant inférieure peut être raccordé à un autre tube-filtre (12), dans lequel sur la paroi de l'un tube-filtre (12) adjacent à une face avant de celui-ci un élément de retenue (114) et dans la zone de la paroi de l'autre tube-filtre (12) adjacent à une face avant de celui-ci un guidage de coulisse (116) sont formés, dans lequel les deux tubes filtrants (12) avec leur faces avant, sur lesquelles chacun l'élément de retenue (114) et le guidage de coulisse (116) sont formés, sont emboîtables de sorte que l'élément de retenue (114) ainsi peut se mettre en prise avec le guidage de coulisse (116) à engagement positif.

10. Dispositif (1) selon l'une quelconque des revendications 7 à 9, **caractérisé en ce que** le guidage de coulisse (116) comporte:
- une première partie (I) qui est ouverte adjacente à la face avant de l'élément tubulaire sous la forme du tube plein (10), du tube-filtre (12) et/ou du capuchon de levage (24) et s'étend parallèlement à l'axe longitudinal (L) de l'élément tubulaire,
- une seconde partie (II) faisant suite à la première partie (I) et s'étendant obliquement à l'axe longitudinal (L) de l'élément tubulaire et
- une troisième partie (III) faisant suite à la seconde partie (II) et s'étendant transversalement à l'axe longitudinal (L) de l'élément tubulaire,
dans lequel la troisième partie (III) du guidage de coulisse (116) comporte un creux d'enclenchement (120) dans lequel l'élément de retenue (114) est encliquetable, dans lequel l'élément tubulaire, lorsque l'élément de retenue (114) est reçu dans le creux d'enclenchement (120), bloque contre une torsion automatique relative à l'élément tubulaire adjacent et est fixé dans la direction axiale parallèlement à l'axe longitudinal relatif au dispositif (1), de sorte qu'un mouvement axial de cet élément tubulaire relatif à l'élément tubulaire adjacent parallèlement à l'axe longitudinal (L) du dispositif (1) n'est pas possible.

11. Procédé pour refouler de l'eau d'un puits (2) pour l'épuisement ou l'abaissement du niveau de l'eau dans un ouvrage de génie civil, dans lequel un dispositif (1) selon l'une quelconque des revendications 1 à 10 est utilisé, dans lequel l'eau (Wᵣ) lors d'un fonctionnement du moyen de pompage (18) arrive dans le tube-filtre (12) radialement de l'extérieur et ensuite est évacuée du puits (2) à travers l'au moins un tube plein (10), dans lequel l'eau (Wₛ), avant d'entrer dans le tube-filtre (12) radialement de l'extérieur, traverse un remblai d'espace annulaire (5) du puits (2) verticalement vers le bas dans la direction du tube-filtre (12),
dans lequel un diamètre (D₁₂) du tube-filtre (12) du dispositif (1) selon l'une quelconque des revendications 1 à 10 est inférieur au diamètre (D₁₀) du tube plein (10) de ce dispositif (1), de sorte que le remblai d'espace annulaire (5) du puits (2) adjacent à l'au moins un tube-filtre (12) du dispositif (1) par rapport au remblai d'espace annulaire (5) du puits (2) adjacent à l'au moins un tube plein (10) du dispositif (1) comporte une extension radiale supérieure.

12. Procédé selon la revendication 11, **caractérisé en ce qu'**une section axiale longitudinale (A_{V}), dans lequel s'étend l'au moins un tube plein (10) du dispositif (1) selon l'une quelconque des revendications 1 à 10 dans un percement (4) du puits (2) verticalement au-dessous d'une couche barrière d'argile (5) du puits (2), correspond à plusieurs fois le diamètre (D₁₀) du tube plein (10), de sorte que l'eau s'écoule à partir d'une zone du puits (2) au-dessous de la couche barrière d'argile (5) verticalement vers le bas le long d'une surface périphérique extérieure (11) du tube plein (10) et à travers le remblai d'espace annulaire (5) du puits (2), avant d'entrer ensuite radialement de l'extérieur dans le tube-filtre (12).

13. Procédé selon la revendication 12, **caractérisé en ce que** l'eau (Wₛ), qui s'écoule verticalement vers le bas le long de la surface périphérique extérieure (11) du tube plein (10) et à travers le remblai d'espace annulaire (5), et ensuite entre le tube-filtre (12) radialement de l'extérieur, du fait que la section axiale longitudinale (A_{V}), dans laquelle s'étend l'au moins un tube plein (10) du dispositif (1) dans le percement (4) du puits (2) verticalement au-dessous de sa couche barrière d'argile (5), correspond à plusieurs fois le diamètre (D₁₀) du tube plein (10), n'est ni tourbillonné ni oxygéné dans ce processus.

14. Procédé selon l'une quelconque des revendications 11 à 13, **caractérisé en ce qu'**une section axiale longitudinale (Aᵥ), dans laquelle l'au moins un tube plein (10) du dispositif (1) selon l'une quelconque des revendications 1 à 10 est prévu correspond au moins deux fois la valeur, de préférence au moins cinq fois la valeur, plus préférablement au moins dix fois la valeur, plus préférablement au moins vingt fois la valeur d'une section axiale longitudinale (A_{F}) dans laquelle l'au moins un tube-filtre (12) du dispositif (1) selon l'une quelconque des revendications 1 à 10 est prévu.
